# EUROPEAN PATENT APPLICATION

(11) **EP 4 549 234 A1**
(43) Date of publication of application: **07.05.2025**
(21) Application number: 24209827.5
(22) Date of filing: 30.10.2024
(51) Int. Cl.: B60L 58/18, B60L 53/66

(54) **METHOD AND SYSTEM FOR DECOUPLING CHARGING SIGNALS FROM BATTERY SIGNALS**

(30) Priority: 01.11.2023 US 202318499741
(71) Applicant: BlackBerry Limited, Waterloo, Ontario N2K 0A7 (CA)
(72) Inventor: BLAIS, Pierre Pierre, Waterloo, N2K 0A7 (CA); FERGUSON, Geordon Thomas, Waterloo, N2K 0A7 (CA)
(74) Representative: MERH-IP Matias Erny Reichl Hoffmann Patentanwälte PartG mbB

(57) **Abstract**

A method at a computing device, the method including sending a request to a vehicle communications subsystem to determine a number of charging ports on a vehicle; receiving a response providing the number of charging ports on the vehicle; sending a request to the vehicle communications subsystem to find batteries associated with each charging port; and receiving a response identifying batteries associated with each charging port.

## Description

### FIELD OF THE DISCLOSURE

The present disclosure relates to vehicle systems, and in particular relates to objects within such vehicle systems.

### BACKGROUND

Modern vehicles have many components and sensors. Such components and sensors may be referred to as data objects, and be queried and combined to provide insights into the vehicle and the operation of the vehicle.

However, current tree like structures define the data objects in a rigid way that can lead to problems as technologies evolve.

### BRIEF DESCRIPTION OF THE DRAWINGS

The present disclosure will be better understood with reference to the drawings, in which:
**Figure 1** is a block diagram showing a tree structure for classifying charging under a battery.
**Figure 2** is a block diagram showing a revised tree structure for various batteries under a traction battery branch.
**Figure** 3 is a block diagram showing a revised tree structure for various charging ports under a charging port branch.
**Figure 4** is a dataflow diagram for determining a number of charging ports and whether each charging port is connected.
**Figure 5** is a dataflow diagram for determining a remaining range for a vehicle.
**Figure 6** is a dataflow diagram for an alternative method of determining a remaining range for a vehicle.
**Figure 7** is a dataflow diagram for determining a charge state for a plurality of batteries with a plurality of charging ports.
**Figure 8** is a block diagram showing an example vehicle computing node.
**Figure 9** is a block diagram of a simplified computing device capable of being used with the embodiments of the present disclosure.

### DETAILED DESCRIPTION OF THE DRAWINGS

The present disclosure provides a method at a computing device comprising: sending a request to a vehicle communications subsystem to determine a number of charging ports on a vehicle; receiving a response providing the number of charging ports on the vehicle; sending a request to the vehicle communications subsystem to find batteries associated with each charging port; and receiving a response identifying batteries associated with each charging port.

The present disclosure further provides s computing device comprising: a processor; and a communications subsystem, wherein the computing device is configured to: send a request to a vehicle communications subsystem to determine a number of charging ports on a vehicle; receive a response providing the number of charging ports on the vehicle; send a request to the vehicle communications subsystem to find batteries associated with each charging port; and receive a response identifying batteries associated with each charging port.

The present disclosure further provides a non-transitory computer readable medium for storing instruction code, which, when executed by a processor of a computing device, cause the computing device to: send a request to a vehicle communications subsystem to determine a number of charging ports on a vehicle; receive a response providing the number of charging ports on the vehicle; send a request to the vehicle communications subsystem to find batteries associated with each charging port; and receive a response identifying batteries associated with each charging port.

In a modern vehicle, information from one or more physical sensors may be processed and combined to create an "Insight" that may be valuable in a system. Such one or more physical sensors and the processing associated therewith may be referred to logically as a micro-service or a Synthetic Sensor (SS). The terms micro-service and synthetic sensor are used interchangeably herein.

Synthetic Sensors may exist in other types of applications, including but not limited to medical applications, manufacturing applications, Internet of Things applications, among others, and the present disclosure is not limited to vehicle applications. Vehicle applications are provided for illustration below.

Insight is the term used herein to describe any computer created interpretation of basic sensor data. Insights can be as straight forward as data aggregation or correlation or as complex as artificial intelligence and machine learning. For example, a temperature sensor providing high and low watermarks for notification may be considered an "insight". For location services, geofencing is an insight. For cameras, occupant recognition may be an insight. The use of a combination of sensors such as temperature sensors and cameras, may be used with an artificial intelligence model to determine whether a car seat is occupied in a hot vehicle, which may be an insight. Many other examples of insights are possible.

In one embodiment, the vehicle applications may be implemented in a system providing consistent access to vehicle data and intelligent insights in a way that is familiar and accessible to developer communities. Such environment may allow cloud developers to extend their reach to the edge within the vehicle through the development of Synthetic Sensors that derive intelligent insights on vehicle data using common cloud development technologies and paradigms. Such environment may provide consistent access to vehicle data such that Synthetic Sensors can be written and deployed to a broad vehicle base without bespoke customization.

However, in order for such vehicle data to be easily accessed, the data objects within the vehicle need to be identified, located, and associations between various data objects within the vehicle need to be easily identified.

This may be complicated by different vehicle manufacturers using different naming conventions and relationship conventions. In order to overcome this, the Vehicle Signal Specification (VSS) is currently being used. VSS defines itself as a way to create a common understanding of vehicle signals in order to reach a common language independent of the protocol or serialization used. The VSS introduces a domain taxonomy for vehicle signals that can be used as standard in automotive applications to communicate information around the vehicle. The VSS focuses on vehicle signals, in the sense of classical attributes, sensors and actuators with the raw data communicated over vehicle buses and data which is more commonly associated with the infotainment system alike.

The VSS naming convention is, for example, described in Table 1 below.

**Table 1: Example VSS naming conventions**

| |
|---|
| Body. Mirror. Left. Heated |
| Body. Mirror. Right. Heated |
| Cabin. Door. Row1.left.open |
| Cabin. Door. Row2.left.open |
| Cabin. Seat. Row1.left.heated |
| Cabin. Seat. Row1.right.heated |
| Cabin. Seat. Row2.left.heated |
| Cabin.Seat.Row2.middle.heated |
| Cabin.Seat.Row2.right.heated |

As seen from Table 1 above, a dot notated name path is utilized in the VSS to identify a component as a branch (a set of data entries) and a data entry (a sensor, actuator, or attribute).

Utilizing the dot notated name path, a tree structure can therefore be built for the various data objects within the vehicle.

The Connected Vehicle Systems Alliance (COVESA) defines the Vehicle Signal Specification, and a catalogue of signals. More generally, a catalogue of signals is referred to herein as a "VSS Catalogue". However, various portions of the COVESA VSS catalogue are currently rigid. For example, batteries and charging are associated on a one-to-one basis and grouped under the battery. This is shown in the example VSS in Table 2 below:

**TABLE 2: VSS For Battery and Charger**

| **Signal** | **Type** | **Data Type** |
|---|---|---|
| Vehicle.Powertrain.TractionBattery | branch | |
| Vehicle.Powertrain.TractionBattery. AccumulatedChargedEnergy | sensor | float |
| Vehicle.Powertrain.TractionBattery. AccumulatedConsumedEnergy | sensor | float |
| Vehicle.Powertrain.TractionBattery.Charging | branch | |
| Vehicle.Powertrain.TractionBattery.Charging. ChargeCurrent | sensor | float |
| Vehicle.Powertrain.TractionBattery.Charging. ChargeLimit | actuator | uint8 |
| Vehicle.Powertrain.TractionBattery.Charging. ChargePlugType | attribute | string |
| Vehicle.Powertrain.TractionBattery.Charging. ChargePortFlap | actuator | string |
| Vehicle.Powertrain.TractionBattery.Charging. ChargeRate | sensor | float |
| Vehicle.Powertrain.TractionBattery.Charging. ChargeVoltage | sensor | float |
| Vehicle.Powertrain.TractionBattery.Charging. IsCharging | sensor | boolean |
| Vehicle.Powertrain.TractionBattery.Charging. IsChargingCableConnected | sensor | boolean |
| Vehicle.Powertrain.TractionBattery.Charging. MaximumChargingCurrent | sensor | float |
| Vehicle. Powertrain.TractionBattery.Charging. Mode | actuator | string |
| Vehicle.Powertrain.TractionBattery.Charging. StartStopCharging | actuator | string |
| Vehicle.Powertrain.TractionBattery.Charging.Timer | branch | |
| Vehicle.Powertrain.TractionBattery.Charging.Timer.Mode | actuator | string |
| Vehicle. Powertrain. TractionBattery.Charging.Timer.Time | actuator | string |
| Vehicle.Powertrain.TractionBattery.Charging. TimeToComplete | sensor | uint32 |
| Vehicle. Powertrain. Traction Battery. GrossCapacity | attribute | uint16 |
| Vehicle.Powertrain.TractionBattery.IsGroundConnected | sensor | boolean |
| Vehicle. Powertrain. Traction Battery. IsPowerConnected | sensor | boolean |
| Vehicle.Powertrain.TractionBattery.NetCapacity | attribute | uint16 |
| Vehicle.Powertrain.TractionBattery.NominalVoltage | attribute | uint16 |
| Vehicle.Powertrain.TractionBattery.Range | sensor | uint32 |
| Vehicle.Powertrain.TractionBattery.ReferentVoltage | attribute | uint16 |
| Vehicle.Powertrain.TractionBattery.StateOfCharge | branch | |
| Vehicle.Powertrain.TractionBattery.StateOfCharge. Current | sensor | float |
| Vehicle. Powertrain. TractionBattery.StateOfCharge. Displayed | sensor | float |
| Vehicle.Powertrain.TractionBattery.StateOfCharge.Target | actuator | uint8 |
| Vehicle.Powertrain.TractionBattery.Temperature | sensor | float |

In Table 2, a sensor is a one way signal originating from a vehicle (i.e., a sensor is a signal to read the value of a property in the vehicle). An actuator is a two directional signal, and can set or get values (i.e., an actuator can be used to control the value of a property in the vehicle). A branch is a node in a tree structure. An attribute is typically a fixed value. The sensors/actuators typically have a publisher (or producer) that updates the signal value continuously when a change occur while an attribute has a set value that should typically not change more than once per ignition cycle.

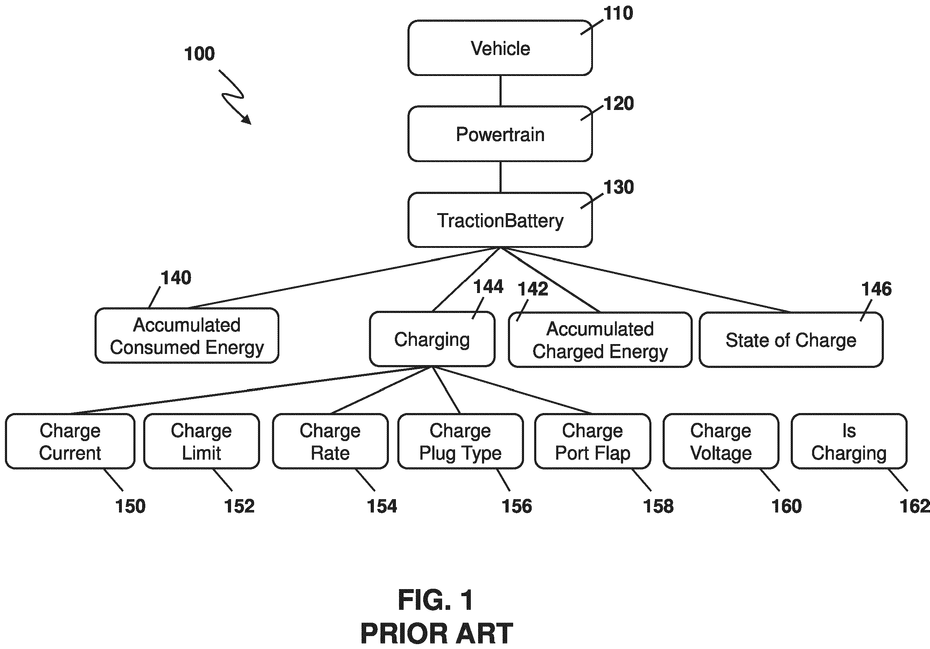

For example, reference is now made to **Figure 1**, which shows an example tree structure for a portion of Table 2 above.

In the embodiment of **Figure 1**, an object tree **100** has the vehicle **110** as the root. Below this root, an example in the tree could be a powertrain **120.**

Powertrain **120** may have a battery, shown as TractionBattery **130.**

The battery may have various sensors, attributes, actuators and branches. In the example of **Figure 1**, TractionBattery **130** includes sensors such as Accumulated Consumed Energy sensor **140** and Accumulated Charged Energy sensor **142.** Other sensors and actuators from Table 2 above are not illustrated for simplicity.

Further, in the example of **Figure 1**, TractionBattery **130** includes a charging branch **144** and a state of charge branch **146.** State of charge branch **146** is not shown with children for simplicity, but children are provided in Table 2 above.

Charge branch **144** includes various sensors, actuators and attributes. The example of **Figure 1** shows a charge current sensor **150,** a charge limit actuator **152,** a charge rate sensor **154,** a charge plug type attribute **156,** a charge port flap actuator **158,** a charge voltage sensor **160** and an "Is Charging" sensor **162.** Other sensors, attributes and actuators are shown in Table 2 above.

The requirement that the charging port and charging information be under a battery branch in the tree structure creates significant limitations. In particular, the structure in the current VSS catalogue is unable to support more than one battery. Furthermore, the charging port is related to each battery, where it should be related to the vehicle.

Therefore, in accordance with the embodiments of the present disclosure, the battery and charging are separated in a VSS tree structure. This allows for one charging port to be related to a plurality of batteries, a plurality of charging ports to be related to various batteries, among other options, leading to an "M" to "N" relationship between charging ports and batteries. These and other elements are described below.

In particular, the charging port is decoupled from the battery in the example of Table 3 below. In this manner, the charging port can be used to support multiple batteries, the charging port can also be defined as having multiple instances in the case of a vehicle having multiple charging ports, among other options.

**TABLE 3: Revised VSS For Battery and Charger**

| Signal | Type | DataType |
|---|---|---|
| Vehicle.ChargingPort | branch | |
| Vehicle.ChargingPort.Port1 | branch | |
| Vehicle.ChargingPort.Port1.Batteries | attribute | string[] |
| Vehicle.ChargingPort.Port1.ChargeCurrent | sensor | float |
| Vehicle.ChargingPort.Port1.ChargeLimit | actuator | uint8 |
| Vehicle.ChargingPort.Port1.ChargePlugType | attribute | string |
| Vehicle.ChargingPort.Port1.ChargePort.Port1Flap | actuator | string |
| Vehicle.ChargingPort.Port1.ChargeRate | sensor | float |
| Vehicle.ChargingPort.Port1.ChargeVoltage | sensor | float |
| Vehicle.ChargingPort.Port1.IsCharging | sensor | boolean |
| Vehicle.ChargingPort.Port1.IsChargingCableConnected | sensor | boolean |
| Vehicle.ChargingPort.Port1.MaximumChargingCurrent | sensor | float |
| Vehicle.ChargingPort.Port1.Mode | actuator | string |
| Vehicle.ChargingPort.Port1.StartStopCharging | actuator | string |
| Vehicle.ChargingPort.Port1.Timer | branch | |
| Vehicle.ChargingPort.Port1.Timer.Mode | actuator | string |
| Vehicle.ChargingPort.Port1.Timer.Time | actuator | string |
| Vehicle.ChargingPort.Port1.TimeToComplete | sensor | uint32 |
| Vehicle.ChargingPort.Port2 | branch | |
| Vehicle.ChargingPort.Port2.Batteries | attribute | string[] |
| Vehicle.ChargingPort.Port2.ChargeCurrent | sensor | float |
| Vehicle.ChargingPort.Port2.ChargeLimit | actuator | uint8 |
| Vehicle.ChargingPort.Port2.ChargePlugType | attribute | string |
| Vehicle.ChargingPort.Port2.ChargePort.Port1Flap | actuator | string |
| Vehicle.ChargingPort.Port2.ChargeRate | sensor | float |
| Vehicle.ChargingPort.Port2.ChargeVoltage | sensor | float |
| Vehicle.ChargingPort.Port2.IsCharging | sensor | boolean |
| Vehicle.ChargingPort.Port2.IsChargingCableConnected | sensor | boolean |
| Vehicle.ChargingPort.Port2.MaximumChargingCurrent | sensor | float |
| Vehicle.ChargingPort.Port2.Mode | actuator | string |
| Vehicle.ChargingPort.Port2.StartStopCharging | actuator | string |
| Vehicle.ChargingPort.Port2.Timer | branch | |
| Vehicle.ChargingPort.Port2.Timer.Mode | actuator | string |
| Vehicle.ChargingPort.Port2.Timer.Time | actuator | string |
| Vehicle.ChargingPort.Port2.TimeToComplete | sensor | uint32 |
| Vehicle.ChargingPort.PortCount | attribute | integer |
| Vehicle.Powertrain.TractionBattery.Battery1 | branch | |
| Vehicle.Powertrain.TractionBattery.Battery1. AccumulatedChargedEnergy | sensor | float |
| Vehicle.Powertrain.TractionBattery.Battery1. AccumulatedConsumedEnergy | sensor | float |
| Vehicle.Powertrain.TractionBattery.Battery1. GrossCapacity | attribute | uint16 |
| Vehicle.Powertrain.TractionBattery.Battery1.Id | attribute | string |
| Vehicle.Powertrain.TractionBattery.Battery1. IsGroundConnected | sensor | boolean |
| Vehicle.Powertrain.TractionBattery.Battery1. IsPowerConnected | sensor | boolean |
| Vehicle.Powertrain.TractionBattery.Battery1.NetCapacity | attribute | uint16 |
| Vehicle.Powertrain.TractionBattery.Battery1. NominalVoltage | attribute | uint16 |
| Vehicle.Powertrain.TractionBattery.Battery1.Range | sensor | uint32 |
| Vehicle.Powertrain.TractionBattery.Battery1. ReferentVoltage | attribute | uint16 |
| Vehicle.Powertrain.TractionBattery.Battery1. StateOfCharge | branch | |
| Vehicle.Powertrain.TractionBattery.Battery1. StateOfCharge.Current | sensor | float |
| Vehicle.Powertrain.TractionBattery.Battery1. StateOfCharge.Displayed | sensor | float |
| Vehicle.Powertrain.TractionBattery.Battery1. StateOfCharge.Target | actuator | uint8 |
| Vehicle.Powertrain.TractionBattery.Battery1. | sensor | float |
| Temperature | | |
| Vehicle.Powertrain.TractionBattery.Battery2 | branch | |
| Vehicle.Powertrain.TractionBattery.Battery2. AccumulatedChargedEnergy | sensor | float |
| Vehicle.Powertrain.TractionBattery.Battery2. AccumulatedConsumedEnergy | sensor | float |
| Vehicle.Powertrain.TractionBattery.Battery2. GrossCapacity | attribute | uint16 |
| Vehicle.Powertrain.TractionBattery.Battery2.Id | attribute | string |
| Vehicle.Powertrain.TractionBattery.Battery2. IsGroundConnected | sensor | boolean |
| Vehicle.Powertrain.TractionBattery.Battery2. IsPowerConnected | sensor | boolean |
| Vehicle.Powertrain.TractionBattery.Battery2.NetCapacity | attribute | uint16 |
| Vehicle.Powertrain.TractionBattery.Battery2. NominalVoltage | attribute | uint16 |
| Vehicle.Powertrain.TractionBattery.Battery2.Range | sensor | uint32 |
| Vehicle.Powertrain.TractionBattery.Battery2. ReferentVoltage | attribute | uint16 |
| Vehicle.Powertrain.TractionBattery.Battery2. StateOfCharge | branch | |
| Vehicle.Powertrain.TractionBattery.Battery2. StateOfCharge.Current | sensor | float |
| Vehicle.Powertrain.TractionBattery.Battery2. StateOfCharge.Displayed | sensor | float |
| Vehicle.Powertrain.TractionBattery.Battery2. StateOfCharge.Target | actuator | uint8 |
| Vehicle.Powertrain.TractionBattery.Battery2. Temperature | sensor | float |
| Vehicle.Powertrain.TractionBattery.BatteryCount | attribute | integer |
| Vehicle.Powertrain.TractionBattery.Range | sensor | uint32 |

As seen in Table 3, under the powertrain the traction battery and the charging port have been separated. Various sensors, actuators, attributes and branches exist under each of the charging port and traction battery.

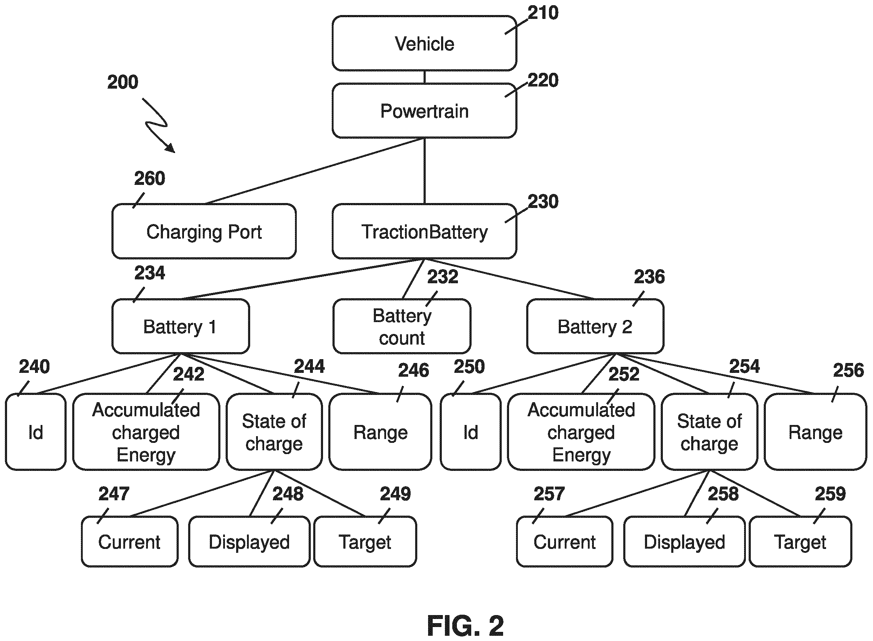

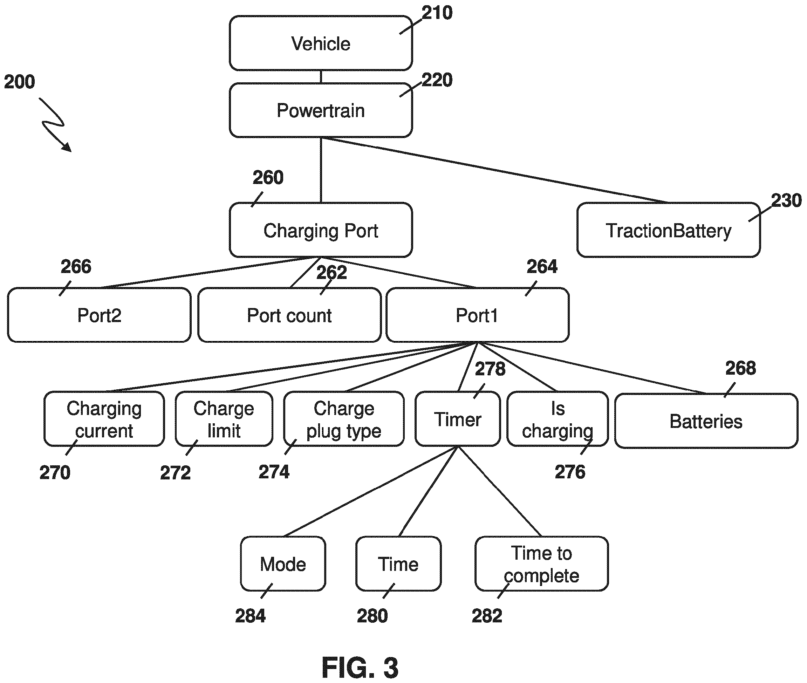

This is further illustrated with reference to **Figures 2** and **3****.** In particular, reference is now made to **Figure 2****,** which shows a revised VSS catalogue in which the charging port and battery have been separated. Object tree **200** includes a vehicle **210** which has a powertrain **220.**

Under powertrain, traction battery **230** is a branch for the various batteries on the vehicle. Charging port **260** is a branch for the one or more charging ports associated with the vehicle. An example of the branch nodes under charging port **260** is shown with regard to **Figure 3****.** In some cases, powertrain **220** can also include information of non-traction batteries (e.g., batteries for medical equipment).

Under traction battery **230,** a battery count value or attribute **232** may indicate how many traction batteries are present in the vehicle. A first battery branch **234** and a second battery branch **236** are provided in the example of **Figure 2****.**

Under the first battery branch **234,** various sensors, actuators and attributes, as well as sub branches may exist. These are shown regarding Table 3 above, and a subset are illustrated in the example of **Figure 2****.** In particular, an identifier attribute **240** is provided. An accumulated charged energy sensor **242** is provided. A state of charge branch **244** is provided and a range sensor **246** is provided.

The state of charge of branch may include a current charge **247,** a displayed charge **248,** and a target charge **249.**

Similarly, under the second battery branch **236**, various sensors, actuators and attributes, as well as sub branches may exist. These are shown regarding Table 3 above, and a subset are illustrated in the example of **Figure 2****.** In particular, an identifier attribute **250** is provided. An accumulated charged energy sensor **252** is provided. A state of charge branch **254** is provided and a range sensor **256** is provided.

The state of charge branch may include a current charge **257**, a displayed charge **258**, and a target charge **259.**

Thus, as shown in **Figure 2**, the traction battery branch may have different batteries associated therewith, each identified by their own branch. A battery count **232** may indicate the number of batteries. In some cases, an enumerated list could exist as an attribute under the traction battery branch to list the batteries associated with the vehicle.

Similarly, a charging port branch could have one or more charging ports associated therewith. Reference is now made to **Figure 3****.**

In the embodiment of **Figure 3**, vehicle **210** includes a powertrain **220** which includes the traction battery branch **230** and the charging port branch **260.**

Under the charging port branch **260** a port count attribute **262** indicates the number of charging ports associated with a vehicle. For example, in some cases a vehicle may have different battery banks that could be charged using different charging ports. One non-limiting example may be an ambulance equipped with batteries that are certified as medical grade for running medical equipment and further has batteries for moving the vehicle. In this case, the charging port for the medical batteries may be different than the charging port for the traction batteries. Other examples are possible.

Therefore, in the example of **Figure 3**, a first port branch **264** and a second port branch **266** may exist.

Each port branch may have an attribute, referred to as batteries **268,** which may be a string of enumerated values indicating the batteries associated with that charging port. In some cases, the enumerated list could include identifiers for the batteries. In other cases, the enumerated list could include the path within the VSS for the batteries. For example, in the case of that first port **264** has two battery banks associated therewith, the enumerated list for the attribute may include [vehicle.powertrain.tractionbattery.battery1, vehicle.powertrain.tractionbattery.battery2]. This would allow a vehicle manufacturer to swap battery banks without changes in an ID sensor, and still utilize the naming conventions of VSS.

In practice, an application could then query a charging port to determine which batteries are associated with that port and then directly obtain information from such batteries utilizing the paths from the enumerated list.

Other sensors, attributes and actuators could exist under the port branches, and examples of such sensors, attributes, and actuators are listed in Table 3 above. In the embodiment of **Figure 3****,** a charging current sensor **270,** a charge limit actuator **272,** a charge plug type **274,** and an "is charging" sensor **276** are illustrated.

Further, a timer branch **278** with a time actuator **280,** a time to complete sensor **282** and a mode actuator **284** are provided.

Therefore, utilizing the examples of **Figures 2** and **3** and **Table 3,** the charging port is decoupled from the batteries to allow for various functionality within the vehicle. This allows multiple batteries to be supported in the vehicle, multiple charging ports to be supported for the vehicle, and an M to N relationship to exist between charging ports and batteries. In other cases, multiple charging ports (for example different types of charging ports) could be used for charging the same set of batteries. Other options are possible. Data objects may be associated with each other using attributes within the VSS structure.

### Usage

Various examples are provided below to indicate how the decoupling of the charging ports and batteries, and more generally the association between data objects using attributes, could be used in practice.

### Is My Vehicle Plugged In?

In one example, a driver may arrive at their office and not remember whether they plugged in their vehicle in the parking lot. In the prior VSS system, only one battery would exist and only one charging port would exist, and therefore the relationship was set. However, in more modern vehicles with multiple batteries and potentially multiple charging ports, such query is not as simple.

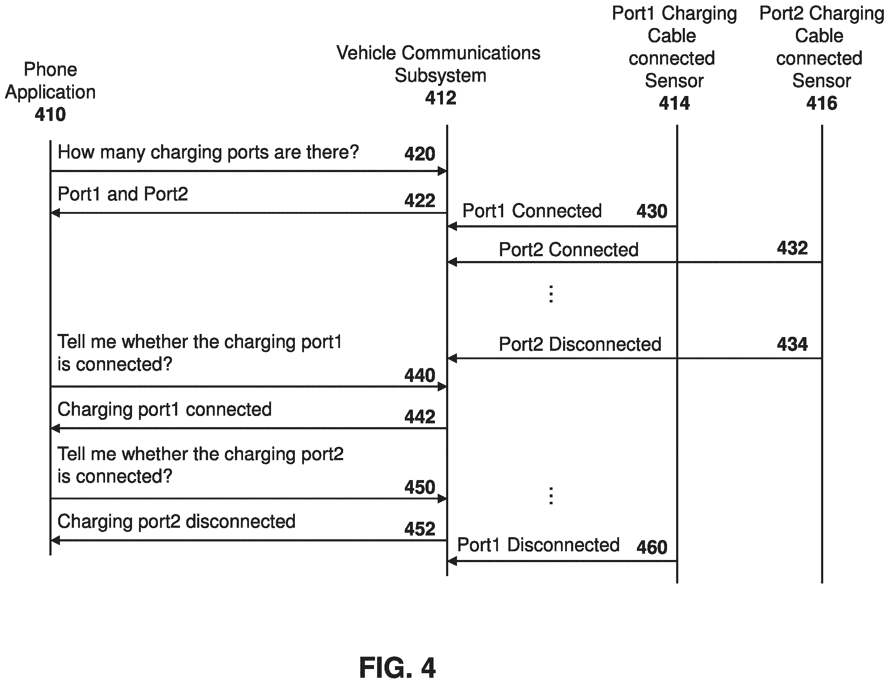

Therefore, reference is now made to **Figure 4****.** In the example of **Figure 4****,** a phone application **410** may communicate with a vehicle communications subsystem **412.** The phone application **410** can be an application on a mobile phone. The vehicle communications subsystem **412** may be on the vehicle.

Such communication may be direct communication in some cases. For example, if the vehicle communications subsystem and the phone application are both on the same Wi-Fi network, they may be able to communicate directly with each other.

In other cases, the communication may be over a cellular network or other wide area network. In this case, intermediary servers may exist to facilitate the communication. For example, the vehicle manufacturer may have a server that all communications routed to the vehicle may need to travel through. Other examples are possible

The vehicle communications subsystem **412** may store a copy of the VSS catalogue for the vehicle. The vehicle communications subsystem **412** may further store the latest state of the vehicle and may further collect signals from various sensors. In the example of the **Figure 4****,** a charging cable connected sensor **414** from the first charging port and a charging cable connected sensor **416** from the second charging port may provide signals that may be intercepted or collected by the vehicle communications subsystem **412.** The charging cable connected sensors **414** and **416** may be on the vehicle.

In this case, a phone application **410** may query find out how many charging ports are on the vehicle, shown with message **420.** As the number of charging ports is an attribute of the vehicle, the vehicle communications subsystem **412** will have this information stored and can therefore provide a message **422** back to phone application **410** indicating at least one of: the number of charging ports, an identifier for the charging ports, a path for the charging ports, among other information.

Subsequently, vehicle communications subsystem **412** may intercept or collect signals. For example, charging cable connected sensor **414** may provide a signal that the charging cable is connected, shown with message **430.** Similarly, charging cable connected sensor **416** may provide a signal **432** that the second charging port cable is connected.

At a subsequent time, the charging cable connected sensor **416** may provide a signal **432** that the second charging port is disconnected. For example, the second charging port may have been disconnected by a third party that needed the cable, or the charging cable may not have been properly connected and was loose and became disconnected, or the driver disconnected the cable, among other options.

A driver may use the phone application **410** to check whether the charging ports are connected. In this case, a message **440** may be sent from the phone application **410** to the vehicle communications subsystem **412** asking whether charging port 1 is connected. In response, the vehicle communications subsystem **412** may send message **442** indicating that charging port 1 is connected.

Similarly, a message **450** may be sent from the phone application **410** to the vehicle communications subsystem **412** asking whether charging port 2 is connected. In response, the vehicle communications subsystem **412** may send message **452** indicating that charging port 2 is disconnected.

The phone application **410** may then consolidate the information and may for example provide, using a user interface, a representation of the vehicle and charging ports.

Subsequently, if the first charging port is disconnected, the charging cable connected sensor **414** may send a message or signal **460,** which may be collected or intercepted by vehicle communications subsystem **412,** indicating that the port is now disconnected.

Thus, in this case the phone application **410** could be built to interact with vehicles having a plurality of batteries, a plurality of charging ports, or both.

### What is the Vehicle Range?

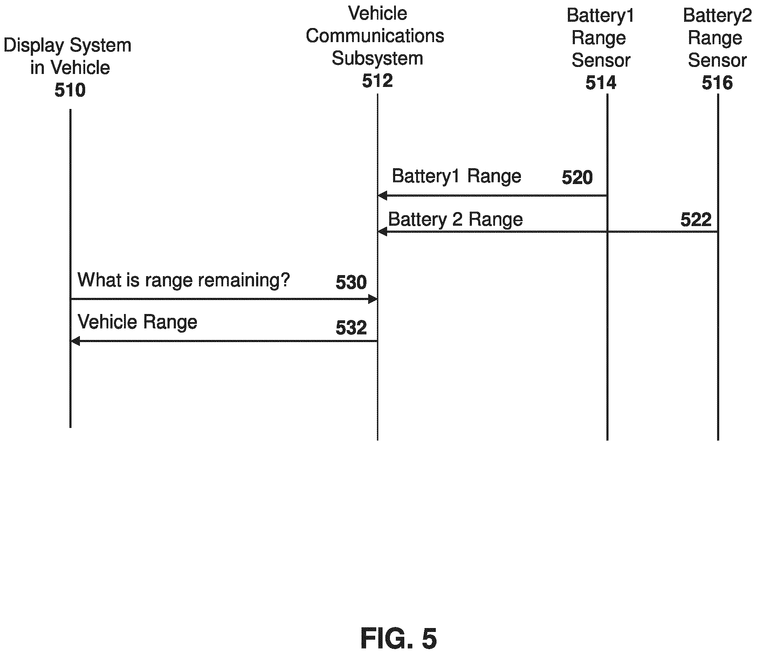

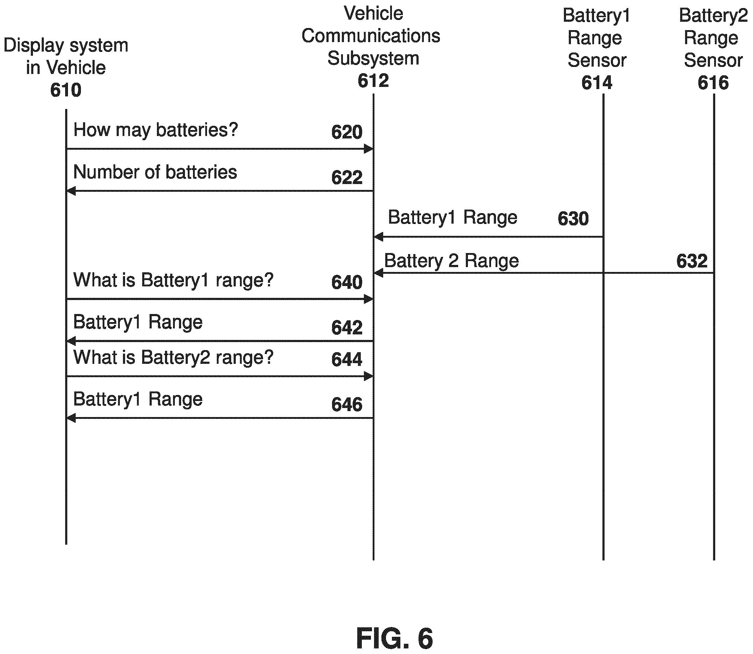

In a vehicle with multiple batteries, the range of the vehicle may be calculated either at the vehicle communications subsystem or on the application that is displaying the range. Reference is now made to **Figures 5** and **6****,** which show that each of these scenarios.

In the embodiment of the **Figure 5****,** it is a display system **510** in the vehicle that is seeking to provide range information to display on a user interface. In this regard, the display system **510** communicates with the vehicle communications subsystem **512.** The vehicle communications subsystem **512** maintains a state of the vehicle, stores a copy of the VSS tree including all of the attributes, and intercepts or collects signals from various sensors and actuators. In this example, the communications may be over an internal bus. However, other communications techniques are possible.

In the example of **Figure 5****,** vehicle communications subsystem **512** collects or intercepts signals from a battery range sensor **514** from the first battery and a battery range sensor **516** from the second battery.

Battery range sensor **514** periodically sends the battery range as a signal **520,** which is collected by vehicle communications subsystem **512.**

Similarly, battery range sensor **516** sends range signal **522** for the second battery, which is collected by the vehicle communications subsystem **512.**

The display system **510** in a vehicle may periodically request the remaining range, shown with message **530,** and receive the vehicle range in message **532.**

In an alternative embodiment, the computing device associated with the display may calculate the effective range based on the range received from each individual battery. Reference is now made to **Figure 6****.**

In the embodiment of **Figure 6****,** a display system **610** in a vehicle communicates with vehicle communications subsystem **612.** Vehicle communication subsystem **612** maintains a state of the vehicle, maintains a copy of the VSS catalogue with the attributes for the vehicle, and collects signals from sensors and actuators, including a range sensor **614** for a first battery and a range sensor **616** for a second battery.

In this case, the display system **610** in the vehicle may, if it has not done so previously, request to the number of batteries in the vehicle in message **620.** Such number of batteries is stored as an attribute in the vehicle communication subsystem **612** and is therefore returned in message **622.** In some cases, message **622** may contain the address of the batteries such as vehicle.powertrain.tractionbattery.battery1 and vehicle.powertrain.tractionbattery.battery2. In some cases the information may be obtained by first finding charging ports and, for each charging port, finding the batteries associated with the charging port. Other options are possible.

The range sensors in the batteries may periodically provide their range, for example as signals **630** and **632.**

Using this information, the display system **610** may request, in message **640,** the range for the first battery and receive a response **642.**

The display system **610** in the vehicle may request, from the vehicle communication subsystem **612,** the range for the second battery in message **644,** and receive a response in message **646.**

The range of the vehicle can then be calculated and displayed at the display system **610.**

### Ambulance Fleet Monitoring

In still a further example, an emergency operations center may monitor a fleet of ambulances in which some ambulances are electric powered and others are gasoline vehicles. The electric powered ambulances may have two charging ports, a first for the traction batteries and a second for the emergency equipment. In particular, the emergency equipment batteries may have to meet certain specifications or standards which may not be required for the traction batteries. Further, the charging port for such emergency batteries may have different specifications and standards.

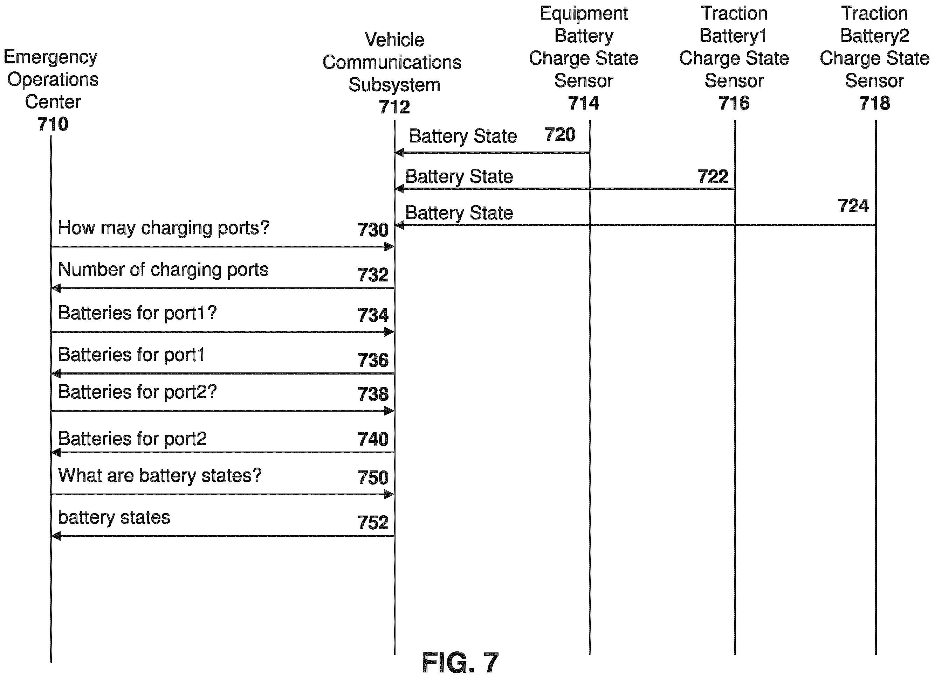

In this regard, as shown in **Figure 7****,** the emergency operations centre **710** may communicate with various ambulances and in **Figure 7** one ambulance is shown is having a vehicle communications subsystem **712.** Vehicle communications subsystem **712** may keep a state of the vehicle, the attributes from the VSS tree, as well as collect signals from sensors and actuators.

In the example of **Figure 7****,** the various battery sensors may be providing a status signal that may be collected by the vehicle communications subsystem **712.** In particular, the emergency equipment battery charge state sensor **714** may provide a battery charge state message **720** periodically. A traction battery **716** may provide a battery charge state signal **722** periodically. A traction battery **718** may also provide a battery charge state signal **724** periodically.

Signals **720, 722** and **724** may be captured by the vehicle communications subsystem **712** and stored as part of the state of the vehicle.

When the emergency operations center wants to update the status of its fleet, it may ask a particular vehicle communication subsystem **712** how many charging ports are part of the ambulance in message **730.** The number of charging ports is an attribute that would be known to the vehicle communications subsystem **712** and be returned in response **732.**

Emergency operations center may then obtain an identifier or address for the various batteries. In particular, as shown with message **734,** emergency operations center **710** may request information about the batteries serviced by charging port 1. In response, a message **736** may provide the identifier or the namespace for the batteries serviced by charging port 1. For example, this may be a string having an array of enumerated values listed in Vehicle. ChargingPort.Port1.Batteries.

If, for example, charging port 1 relates to the charging port for the emergency equipment such as the medical devices on the ambulance, then the string returned may be something like [vehicle.emergency.battery] if a single battery for the equipment exists. In other cases, a plurality of batteries may be identified. In further cases, rather than the path or namespace, a unique identifier for the battery may be provided. Other options are possible.

Similarly, the emergency operations center **710** may send a request for the batteries associated with port 2 in message **738** and receive an identifier or array of enumerated values. For example, if charging port 2 is associated with the traction batteries then the response **740** may include [vehicle.powertrain.tractionbattery.battery1, vehicle.powertrain.tractionbattery.battery2] listed in Vehicle.ChargingPort.Port2.Batteries.

Once the emergency operations centre **710** has a list of all the batteries on the vehicle, then a query could be made as to the charge state for such batteries. This is shown, in the example of **Figure 7****,** as message **750.** As will be appreciated by those in the art, message **750** could include a single message having all the batteries for which information is sought. In other cases, message **750** could be broken into individual messages for each battery identified in responses **734** and **738.**

A battery state response **752** could be provided back from the vehicle communications subsystem **712** to the emergency operations center based on the state of the batteries as collected by the vehicle communications subsystem **712.** Again, message **752** could be a single message or could be broken into multiple messages, each addressing a state of a single battery.

The emergency operations center **710** could then update its system to provide more recent information about the status of the fleet. This may allow for mitigating actions to occur if battery levels are too low, for example. Other options for the information are possible

In this way, the emergency operations center does not need to know in the current configuration of any particular vehicle, but could use the requests to the vehicle communication subsystem to identify the number of charging ports, number of batteries and the state of each of the batteries.

### Example Vehicle System

The present disclosure is described with regard to an automotive system with nodes. However, this is merely provided for illustration purposes and the methods and systems described herein could equally be used with any other systems.

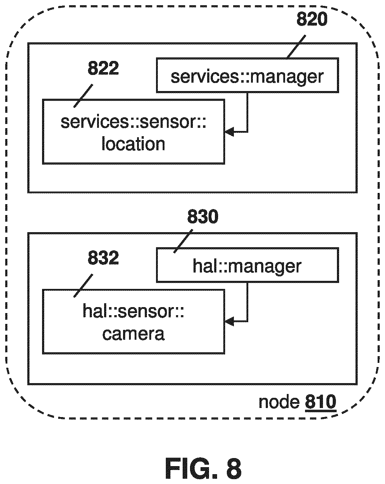

For example, reference is now made to **Figure 8** which shows a node **810.** A node, as used herein, may be one or a group of electronic control units, central processing units, or kernel controls, among other options, and can be considered as a single computing unit.

In the example of **Figure 8****,** node **810** includes a services manager **820** that may interact with drivers for sensors that the node is connected to. For example, the node **810** may have access to a location sensor such as a Global Positioning System (GPS) chipset, as shown at block **822.**

In order to allow node **810** to interact with modules on other nodes, and to provide functionality with a computing system, a Hardware Abstraction Layer (HAL) may be provided on node **810,** which comprises a HAL service **830.** Each HAL service **830** is responsible for the integration of a sensor and may provide various functions, including: integration to the underlying sensor; normalization of the sensor data; and/or, if required, providing a barrier between the safety certified and non-certified software. Other functions for the HAL service are also possible.

In the example of **Figure 8****,** the HAL is provided for camera information, as shown with block **832.**

While the example of **Figure 8** shows a node **810** with a single service and a single HAL, this is merely provided for illustration purposes. A node **810** could have a single service without a HAL, a single HAL without a service, a plurality of services with no HAL, a plurality of HALs with no service, and/or a combination of services and HALs.

One example of a system that could use node **810** would be an applications development environment for vehicles. Such applications development environment may develop applications for user experience including comfort, navigation, infotainment, among others, applications for safety, applications for fleet management; applications for performance monitoring; or other such applications for a vehicle environment. In particular, vehicles provide a plurality of sensors and different makes, models or brands may use different sensors with different data formats or values, creating fragmented sensor readings depending on such sensor. This fragmentation impedes the fostering of an application ecosystem that makes use of vehicle data. In addition, low level sensor data is often too granular to be readily useful to applications.

In this regard, the Hardware Abstraction Layer can be used to provide hardware independent sensor interfaces/abstractions which may encapsulate interaction with underlying sensor drivers. The use of the hardware abstraction in the various computing nodes creates a platform that is extensible, can provide barriers between modules to, for example, enforce safety certified systems being separate from other systems, among other options.

Applications do not interact directly with sensor hardware to access sensor data, instead they leverage the Hardware Abstraction Layer. This separation provides a clear distinction between the responsibilities of the HAL (sensor integration and normalizing sensor data) and other abstractions such as a Vehicle Abstraction Layer (VAL), used for managing access to vehicle data and providing value-added insights.

Specifically, insights may leverage sensor data from multiple HALs in order to provide vehicle abstraction and value-added insights. Vehicle insight services in the VAL may control access to a normalized form of vehicle data and provide value-added inferences. Examples of insight services may include a Location Service, which may provide coordinate location data in a consistent format as well as insights such as geo-fencing; a Seat Service, which may provide a myriad of seat information such as belt status, weight, position, and child lock status; a Camera Service which may provide the video stream for in-cabin camera and possibly functions such as conversions and/or clipping; a Battery Service which may provide insights and access to battery such as charge state/consumption/projected hours remaining/projected range; a Door Service which may provide an abstraction for vehicle doors and door status; among others.

Insight Services may leverage sensor data from multiple HALs in order to provide vehicle abstraction and value-add insights. Higher level insights on data enable application developers to create future automotive experiences. Insight is the term used to describe any value-added interpretation of basic sensor data. Insights can be as straight forward as data aggregation or correlation or as complex as artificial intelligence and machine learning. For example, for a temperature sensor, providing high and low watermarks for notification may be considered an "insight". For location services - geofencing is an insight, for cameras - occupant recognition may be considered an insight.

Nodes with services and HAL managers as described in **Figure 8** are therefore needed for such application development environment. Node **810** will, in many systems, need to communicate with other nodes, such as other ECUs, CPUs, or computing systems, where such ECUs, CPUs, or computing systems may use a different operating system from that of node **810.**

Such system may use a modified VSS system with the vehicle to find data objects and data object associations. In this regard, a vehicle abstraction layer can easily provide information regardless of the specific make and model of the vehicle for which information is sought.

### Example Computing System

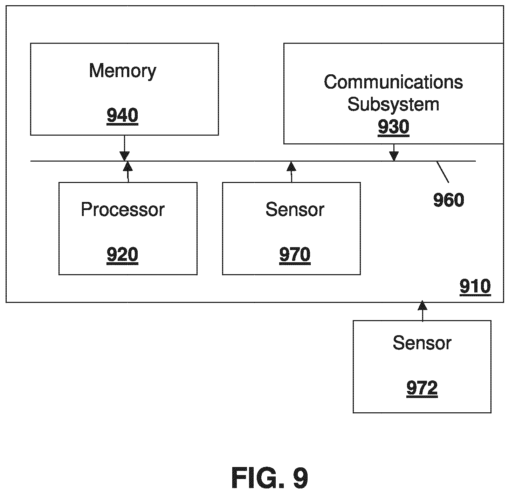

The above network elements, nodes, computing devices and other computing platforms may be implemented using any computing device. One simplified diagram of a computing device is shown with regard to **Figure 9****.** The computing device of **Figure 9** could be any fixed or mobile computing device.

In **Figure 9****,** device **910** includes a processor **920** and a communications subsystem **930,** where the processor **920** and communications subsystem **930** cooperate to perform the methods of the embodiments described above. Communications subsystem **930** allows device **910** to communicate with other devices or network elements and may vary based on the type of communication being performed. Further, communications subsystem **930** may comprise a plurality of communications technologies, including any wired or wireless communications technology.

Processor **920** is configured to execute programmable logic, which may be stored, along with data, on device **910,** and shown in the example of **Figure 9** as memory **940.** Memory **940** can be any tangible, non-transitory computer readable storage medium which stores instruction code that, when executed by processor **920** cause device **910** to perform the methods of the present disclosure. The computer readable storage medium may be a tangible or in transitory/non-transitory medium such as optical (e.g., CD, DVD, etc.), magnetic (e.g., tape), flash drive, hard drive, or other memory known in the art.

Alternatively, or in addition to memory **940,** device **910** may access data or programmable logic from an external storage medium, for example through communications subsystem **930.**

In the example of **Figure 9****,** one or more internal sensors **970** or external sensors **972** may be associated with the computing device. However, this is optional and in some cases computing device **910** will not be associated with sensors.

Communications between the various elements of device **910** may be through an internal bus **960** in one embodiment. However, other forms of communication are possible.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

While operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be employed. Moreover, the separation of various system components in the implementation described above should not be understood as requiring such separation in all implementations, and it should be understood that the described program components and systems can generally be integrated together in a single software product or packaged into multiple software products.

Also, techniques, systems, subsystems, and methods described and illustrated in the various implementations as discrete or separate may be combined or integrated with other systems, modules, techniques, or methods. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and may be made.

While the above detailed description has shown, described, and pointed out the fundamental novel features of the disclosure as applied to various implementations, it will be understood that various omissions, substitutions, and changes in the form and details of the system illustrated may be made by those skilled in the art. In addition, the order of method steps are not implied by the order they appear in the claims.

When messages are sent to/from an electronic device, such operations may not be immediate or from the server directly. They may be synchronously or asynchronously delivered, from a server or other computing system infrastructure supporting the devices/methods/systems described herein. The foregoing steps may include, in whole or in part, synchronous/asynchronous communications to/from the device/infrastructure. Moreover, communication from the electronic device may be to one or more endpoints on a network. These endpoints may be serviced by a server, a distributed computing system, a stream processor, etc. Content Delivery Networks (CDNs) may also provide may provide communication to an electronic device. For example, rather than a typical server response, the server may also provision or indicate a data for content delivery network (CDN) to await download by the electronic device at a later time, such as a subsequent activity of electronic device. Thus, data may be sent directly from the server, or other infrastructure, such as a distributed infrastructure, or a CDN, as part of or separate from the system.

Typically, storage mediums can include any or some combination of the following: a semiconductor memory device such as a dynamic or static random access memory (a DRAM or SRAM), an erasable and programmable read-only memory (EPROM), an electrically erasable and programmable read-only memory (EEPROM) and flash memory; a magnetic disk such as a fixed, floppy and removable disk; another magnetic medium including tape; an optical medium such as a compact disk (CD) or a digital video disk (DVD); or another type of storage device. Note that the instructions discussed above can be provided on one computer-readable or machine-readable storage medium, or alternatively, can be provided on multiple computer-readable or machine-readable storage media distributed in a large system having possibly a plurality of nodes. Such computer-readable or machine-readable storage medium or media is (are) considered to be part of an article (or article of manufacture). An article or article of manufacture can refer to any manufactured single component or multiple components. The storage medium or media can be located either in the machine running the machine-readable instructions, or located at a remote site from which machine-readable instructions can be downloaded over a network for execution.

In the foregoing description, numerous details are set forth to provide an understanding of the subject disclosed herein. However, implementations may be practiced without some of these details. Other implementations may include modifications and variations from the details discussed above. It is intended that the appended claims cover such modifications and variations.

## Claims

1. A method at a computing device comprising:
sending a request to a vehicle communications subsystem to determine a number of charging ports on a vehicle;
receiving a response providing the number of charging ports on the vehicle;
sending a request to the vehicle communications subsystem to find batteries associated with each charging port; and
receiving a response identifying batteries associated with each charging port.

2. The method of claim 1, wherein the number of charging ports is defined as an attribute of the vehicle.

3. The method of claim 1 or 2, wherein the batteries associated with each charging port are returned in the response as an enumerated list of battery addresses.

4. The method of claim 3, further comprising, for each battery in the enumerated list of battery addresses, sending a request to the vehicle regarding a status of the battery and receiving a response.

5. The method of claim 4, wherein a charging port has a plurality of traction batteries associated with it.

6. The method of any one of claims 1 to 5, wherein the request to the vehicle communications subsystem to determine the number of charging ports on the vehicle comprises a Vehicle Signal Specification (VSS) request where *Vehicle.ChargingPort.PortCount* is an attribute of the vehicle.

7. The method of claim 6, wherein each charging port is identified as *Vehicle.ChargingPort.PortX,* where X is an integer between 1 and the port count value.

8. The method of any one of claims 1 to 7, wherein a battery is associated with more than one charging port.

9. The method of any one of claims 1 to 8, wherein the number of charging ports is greater than or equal to two, and wherein batteries associated with a first charging port comprise traction batteries, and batteries associated with a second charging port comprise emergency equipment batteries for the vehicle.

10. A computing device comprising:
a processor; and
a communications subsystem,
wherein the computing device is configured to perform the method of any one of claims 1 to 9.

11. A non-transitory computer readable medium for storing instruction code, which, when executed by a processor of a computing device, cause the computing device to perform the method according to any one of claims 1 to 9.
